(19) **Europäisches Patentamt / European Patent Office / Office européen des brevets**

(11) **EP 2 413 602 A1**

(12) # EUROPEAN PATENT APPLICATION
published in accordance with Art. 153(4) EPC

(43) Date of publication:
**01.02.2012 Bulletin 2012/05**

(51) Int Cl.:
*H04N 7/18* (2006.01)     *H04N 5/225* (2006.01)
*H04N 5/232* (2006.01)

(21) Application number: **10756012.0**

(22) Date of filing: **19.03.2010**

(86) International application number:
**PCT/JP2010/054834**

(87) International publication number:
**WO 2010/110215 (30.09.2010 Gazette 2010/39)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **25.03.2009 JP 2009074089**

(71) Applicant: **Victor Company Of Japan, Limited
Kanagawa-ku
Yokohama-shi
Kanagawa 221-8528 (JP)**

(72) Inventor: **FUJISHIRO, Shinji
Yokohama-shi
Kanagawa 221-8528 (JP)**

(74) Representative: **Wagner, Karl H.
Wagner & Geyer Partnerschaft
Patent- und Rechtsanwälte
Gewürzmühlstrasse 5
80538 München (DE)**

(54) **IMAGE DISPLAY DEVICE, IMAGE CAPTURE DEVICE, IMAGE DISPLAY SYSTEM, IMAGE DISPLAY METHOD, AND IMAGE COMBINING DEVICE**

(57)     In an automatic tracking process using an aim color, a technique of allowing an observer to confirm the aim color set in the imaging device with ease is provided. An image display device using this technique has a display control unit 211 configured to input video signals obtained as a result of a tracking process using an aim color and color information showing the aim color, the video signals and the color information being generated from an imaging device, and also configured to combine an image based on the video signals with an image based on the color information, and a tracked object indicating unit 212 configured to accept an indication against an object to be tracked in the tracking process, from an outside.

## FIG. 3

**Description**

**TECHNICAL FIELD**

The present invention relates to an imaging device for performing an automatic tracking process with use of an aim color, an image display device for outputting an image from the imaging device, and an image display system including these devices.

**BACKGROUND ART**

In an imaging device, such as surveillance camera and video camera, there is known a technique of automatically tracking a specified subject as an object to be tracked. For instance, there is described an imaging device which memorizes, as an aim color, a specific color belonging to an object to be tracked and subsequently performs an automatic tracking process by detecting the position of the object to be tracked as the basis for the aim color in Patent Document No. 1.

Although such an imaging device tails an object to be tracked for the basis for the aim color automatically, colors of the object to be tracked are apt to vary in appearance due to irradiation conditions of light, adjustments of white balance by video camera, exposure adjustments and so on. In order to maintain the automatic tracking in response to apparent changes in colors of the object to be tracked, there is described a technique of resetting the aim color when the position of the object to be tracked is detected, in Patent Document No. 2.

**CITATION LIST**

**PATENT DOCUMENTS**

Patent Document 1: Japanese Patent Publication Laid-open No.5-284411,
Patent Document 2: Japanese Patent Publication Laid-open No.7-154666.

**SUMMARY OF THE INVENTION**

**PROBLEMS TO BE SOLVED**

Although the above-mentioned technique etc. has improved the accuracy of automatic tracking with use of the aim color in these years, there is a likelihood that the automatic tracking operation fails since the aim color is deviated from the colors of an object to be tracked due to abrupt changes in apparent colors of the object to be tracked or the presence of the other object in approximate color. For this reason, in an actual monitoring field, it is important to monitor images from the imaging device and reset the object to be tracked as occasion demands by a judgment of an observer.

In the conventional automatic tracking process, however, an observer only specifies an object to be tracked and he or she could not know what color has been set as the aim color. In addition, even when the aim color is renewed by the imaging device, an observer could not recognize which color the aim color has been renewed to. Thus, it was impossible to determine how much the aim color set in the imaging device has been deviated from the color of the object to be tracked, providing a difficulty in appropriately resetting the object to be tracked.

In an automatic tracking process using an aim color, therefore, an object of the present invention is to provide a technique of allowing an observer to confirm the aim color set in the imaging device with ease.

**MEANS OF SOLVING THE PROBLEMS**

In order to solve the above problems, an image display device in accordance with a first aspect of the present invention comprises a display control unit configured to input video signals obtained as a result of a tracking process using an aim color and color information showing the aim color, the video signals and the color information being generated from an imaging device, and also configured to combine an image based on the video signals with an image based on the color information, a display unit configured to display a synthetic image combined by the display control unit, and a tracked object indicating unit configured to accept an indication against an object to be tracked in the tracking process, from an outside.

Hereat, when a difference between the aim color shown by the color information inputted most recently and an aim color shown by the color information inputted newly is larger than a predetermined reference, the display control unit may combine the image based on the video signals with the image based on the color information inputted newly.

Again, the display control unit may further input region information of the object to be tracked obtained as a result of the tracking process and also combine the image based on the video signals with the image based on the color information so that the image based on the color information is positioned so as not to overlap a region shown by the region information.

In order to solve the above problems, an imaging device in accordance with a second aspect of the present invention comprises an imaging unit configured to take an image and output video signals related to the image, and a tracking processing unit configured to: accept an assignment of both an object to be tracked and an aim color; renew the aim color when a predetermined condition is satisfied and also perform a tracking process of the object to be tracked while aiming at the video signals related to the image, with use of the aim color established; renew the aim color when the predetermined condition is satisfied; and generate color information showing the aim color renewed and established.

In order to solve the above problems, an image display device in accordance with a third aspect of the present invention includes an imaging device and an image display device, wherein the imaging device includes: an imaging unit configured to take an image and output video signals related to the image; and a tracking processing unit configured to accept an assignment of both an object to be tracked and an aim color, renew the aim color when a predetermined condition is satisfied, and also perform a tracking process of the object to be tracked while aiming at the video signals related to the image, with use of the aim color established, and generate color information showing the aim color established, and the image display device includes: a display control unit configured to input the video signals and the color information generated from the imaging device, and combine an image based on the video signals with an image based on the color information; a display unit configured to display a synthetic image combined by the display control unit; and a tracked object indicating unit configured to accept an indication against the object to be tracked in the tracking process, from an outside, acquire an aim color based on the accepted object to be tracked, and inform the imaging device of the accepted object to be tracked and the acquired aim color.

Here, when a difference between the aim color shown by the color information inputted most recently and an aim color shown by the color information inputted newly is larger than a predetermined reference, the display control unit of the image display device may combine the image based on the video signals with the image based on the color information inputted newly.

Again, the display control unit of the image display device may further input region information of the object to be tracked obtained as a result of the tracking process; and combine the image based on the video signals with the image based on the color information so that the image based on the color information is positioned so as not to overlap a region shown by the region information.

In order to solve the above problems, an image display method in accordance with a fourth aspect of the present invention comprises: a display control step of inputting video signals obtained as a result of a tracking process using an aim color and color information showing the aim color, the video signals and the color information being generated from an imaging device, and combining an image based on the video signals with an image based on the color information; a display step of displaying a synthetic image combined by the display control unit; and a tracked object indication accepting step of accepting an indication against an object to be tracked in the tracking process, from an outside.

Here, when a difference between the aim color shown by the color information inputted most recently and an aim color shown by the color information inputted newly is larger than a predetermined reference, the display control step may combine the image based on the video signals with the image based on the color information inputted newly.

Again, the display control step may further input region information of the object to be tracked obtained as a result of the tracking process, and combine the image based on the video signals with the image based on the color information so that the image based on the color information is positioned so as not to overlap a region shown by the region information.

In order to solve the above problems, an image synthesis device in accordance with a fifth aspect of the present invention comprises: an image synthesizing unit configured to input video signals obtained as a result of a tracking process using an aim color and color information showing the aim color, the video signals and the color information being generated from an imaging device, and also configured to combine an image based on the video signals with an image based on the color information; and a tracked object indicating unit configured to accept an indication against an object to be tracked in the tracking process, from an outside.

Here, when a difference between the aim color shown by the color information inputted most recently and an aim color shown by the color information inputted newly is larger than a predetermined reference, the image synthesizing unit may combine the image based on the video signals with the image based on the color information inputted newly.

Again, the image synthesizing unit may further input region information of the object to be tracked obtained as a result of the tracking process, and combines the image based on the video signals with the image based on the color information so that the image based on the color information is positioned so as not to overlap a region shown by the region information.

## EFFECT OF THE INVENTION

In the automatic tracking process using an aim color, according to the present invention, there is provided a technique of allowing an observer to confirm the aim color established on the side of imaging device, easily.

## BRIEF DESCRIPTION OF THE DRAWINGS

[Fig. 1] Fig. 1 is a block diagram showing the hardware structure of a monitoring system in accordance with an embodiment of the invention.
[Fig. 2] Fig. 2 is a block diagram showing the functional constitution of a monitoring camera in accordance with a first embodiment
[Fig. 3] Fig. 3 is a block diagram showing the functional constitution of a PC.
[Fig. 4] Fig. 4 is a flow chart explaining the operation of the PC of the first embodiment.
[Fig. 5] Fig. 5 is a view showing a screen example displayed on a display device of the first embodiment.
[Fig. 6] Fig. 6 is a flow chart explaining the operation of the monitoring camera of the first embodiment.
[Fig. 7] Fig. 7 is a block diagram showing the functional constitution of the monitoring camera in accordance with a second embodiment.
[Fig. 8] Fig. 8 is a flow chart explaining the characteristic operation of the monitoring camera of the second embodiment.
[Fig. 9] Fig. 9 is a flow chart explaining the characteristic operation of the PC of the second embodiment.
[Fig. 10] Fig. 10 is a view showing a screen example displayed on a display device of the second embodiment.
[Fig. 11] Fig. 11 is a flow chart explaining the characteristic operation of the PC in accordance with a third embodiment.
[Fig. 12] Fig. 12 is a flow chart explaining the characteristic operation of the PC of a modification.
[Fig. 13] Fig. 13 is a view showing a screen example displayed on the display device in the modification.

## EMBODIMENTS OF THE INVENTION

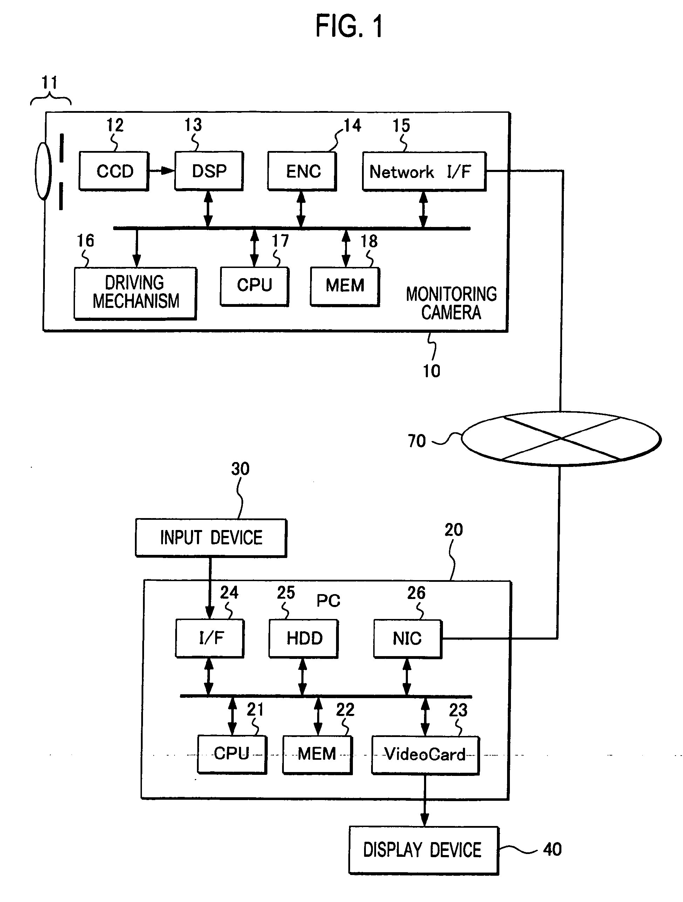

Embodiments of the present invention will be described with reference to drawings, in detail. Fig. 1 is a block diagram showing the hardware structure of a monitoring system in accordance with this embodiment. As shown in this figure, the monitoring system comprises a monitoring camera 10 functioning as an imaging device and a PC 20 functioning as an image display device, both of which are connected with each other through a network 70. The monitoring camera 10 has an automatic tracking function using an aim color as a reference, while the PC 20 is used to display images based on video pictures taken by the monitoring camera 10. Connected to the PC 20 are an input device, such as mouse and keyboard, and a display device 40 that displays the video pictures taken by the monitoring camera 10. Alternately, the display device 40 may be provided with a function of touch panel so that the input device 30 can be integrated with the display device 40.

As shown in this figure, the monitoring camera 10 includes an imaging optical system 11, an image pickup device (CCD) 12, a digital signal processor (DSP) 13, an image compression circuit (ENC) 14, a Network I/F 15, a driving mechanism 16, a CPU 17 and a memory (MEM) 18.

Light transmitted through the imaging optical system 11 is converted to electrical signals by the image pickup device (CCD) 12 and successively subjected to a designated signal processing by the digital signal processor (DSP) 13 to generate digital video signals. Then, the digital video signals are compressed in a given video stream format by the image compression circuit (ENC) 14 and subsequently generated from the Network I/F 15 to the PC 20 through the network 70.

The CPU 17 performs a target tracking process standardizing on the aim color in accordance with a program stored in the memory (MEM) 18 to control the operation of the driving mechanism 16 so that an object to be tracked is accommodated within the field angle of the monitoring camera 10. The driving mechanism 16 comprises drive motors, movable mechanisms, etc. for effecting pan, tilt and zooming actions.

The PC 20 includes a CPU 21, a memory (MEM) 22, a Video Card 23, an interface (I/F) 24, a hard-disc drive (HDD) 25 and a network interface card (NIC) 26 and may be formed by a general-purpose information processing device.

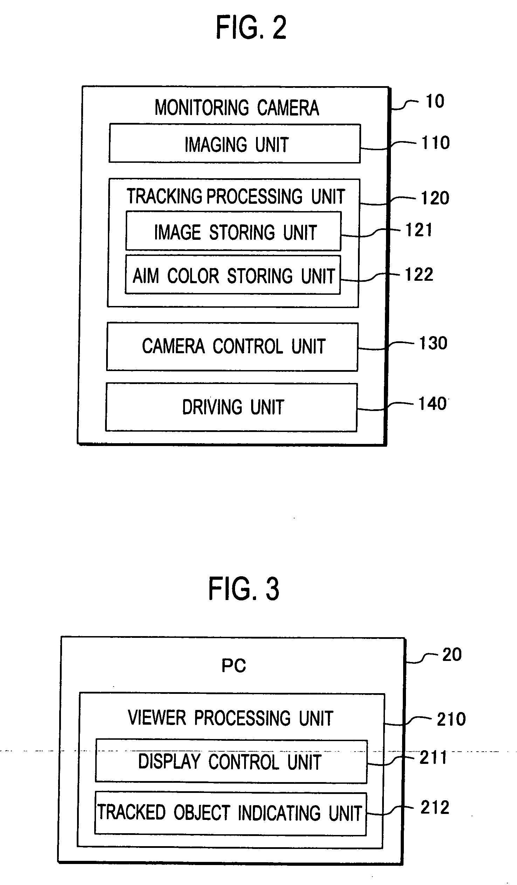

Next, the operation of the monitoring system comprising the above hardware will be described in accordance with the first embodiment. Fig. 2 is a block diagram showing the functional structure of the monitoring camera 10 of this embodiment. As shown in this figure, the monitoring camera 10 includes an imaging unit 110, a tracking processing unit 120, an image storing unit 121, an aim color storing unit 122, a camera control unit 130 and a driving unit 140.

The imaging unit 110 includes the imaging optical system 11, the image pickup device (CCD) 12, the digital signal processor (DSP) 13, the image compression circuit (ENC) 14, etc. to perform both imaging processing and generating of digital video signals. However, the generated video signals to be generated may be in the form of analogue signals.

The tracking processing unit 120 is adapted so that the CPU 17 operates in accordance with the program stored in the memory (MEM) 18, performing the target tracking process adopting the aim color. Algorithm of the target tracking process performed by the tracking processing unit 120 is not limited to only a particular one and is available from a known technique. The tracking processing unit 120 includes the image storing unit 121 and the aim color storing unit 122 as a storage area.

The camera control unit 130 is adapted so that the CPU 17 operates in accordance with the program stored in the memory (MEM) 18, controlling the driving unit 140 based on the area of the object to be tracked, which is obtained by the target tracking process. The driving unit 140 is provided with the driving mechanism 16 to perform pan, tilt and zooming actions in accordance with the control of the camera control unit 130.

Fig. 3 is a block diagram showing the functional structure of the PC 20. As shown in this figure, the PC 20 includes a viewer processing unit 210. The viewer processing unit 210 is adapted so that the CPU 21 operates in accordance with a viewer program stored in the memory (MEM) 22, and includes a display control unit 211 and a tracked object indicating unit 212.

The display control unit 211 controls an image to be displayed on the display device 40, based on the digital video signals generated from the monitoring camera 10. The image that the display control unit 211 displays on the display device 40 is a composite image of an image based on the video signals from the monitoring camera 10 and information designating the aim color acting as a reference for the target tracking process.

Thus, according to this embodiment, the information designating the aim color acting as a reference for the target tracking process is displayed on the display device 40 on the monitoring side. Consequently, an observer is capable of determine how much the aim color and the color of the object to be tracked are deviated from each other, so that the reset of the object to be tracked can be accomplished appropriately.

The-tracked object indicating unit 212 receives an indication of an area corresponding to the object to be tracked from the image displayed on the display device 40 and acquires an aim color based on the area. Then, the same unit informs the monitoring camera 10 of the information about the area on receipt and the information about the aim color.

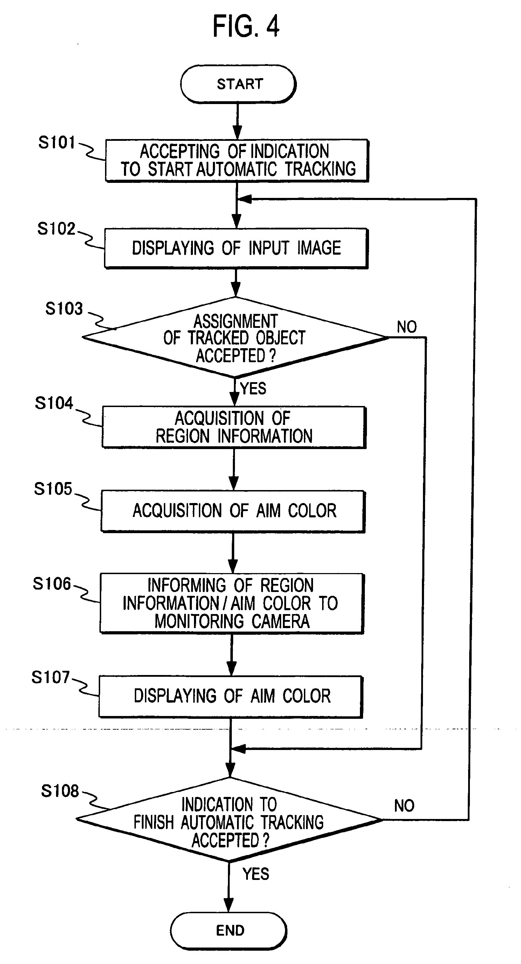

Fig. 4 is a flow chart explaining the operation of the PC 20 of the first embodiment. This operation starts since an observer activates a viewer program to accept an indication of starting the automatic tracking operation (S101). The viewer processing unit 210 constructed on execution of the viewer program brings the monitoring camera 110 into a state of waiting for the assignment of an object to be tracked.

In the viewer processing unit 210, the display control unit 211 displays an image based on the video signals generated from the monitoring camera 10 on the display unit 40 (S102). The displaying of the image based on the inputted video signals is continuously repeated until a reception of a command of completing the target tracking process (S 108).

The observer can assign the object to be tracked on a display screen. For instance, the assignment of the object to be tracked may be accomplished by an observer's clicking on a cursor positioned on the object to be tracked. Alternatively, the assignment may be accomplished by an observer's dragging on a region corresponding to the object to be tracked. Further, if the display device 40 is in the form of a touch panel, the assignment may be accomplished by an observer's touching on the object to be tracked on the screen.

When the assignment of the object to be tracked is accepted from the observer (S103: Yes), the tracked object indicating unit 212 acquires the region information about the accepted object to be tracked (S104). For instance, the coordinates of an assigned position in the screen may be representative of the region information. Alternatively, the coordinates of respective left and right upper points of the assigned region may be representative of the region information.

Next, it is executed to acquire an aim color based on the acquired region information (S105). For instance, the acquisition of the aim color may be accomplished by reading out RGB values of a pixel in the assigned position. Alternatively, the aim color may be established by RGB mean values of peripheral pixels about the assigned position, RGB mean values of a pixel contained in the assigned region or the like.

Then, it is executed to inform the monitoring camera 10 of the acquired region information and the acquired aim color (S106). As described later, the monitoring camera 10 follows up the target based on the so-informed region information and aim color and transmits video signals obtained as a result of the target tracking process to the PC 20.

After accepting the assignment of the object to be tracked, the display control unit 211 combines the information about the aim color acquired at the process (S105) with an image based on the video signals generated from the monitoring camera 10 and displays the resultant image on the display unit 40 (S107).

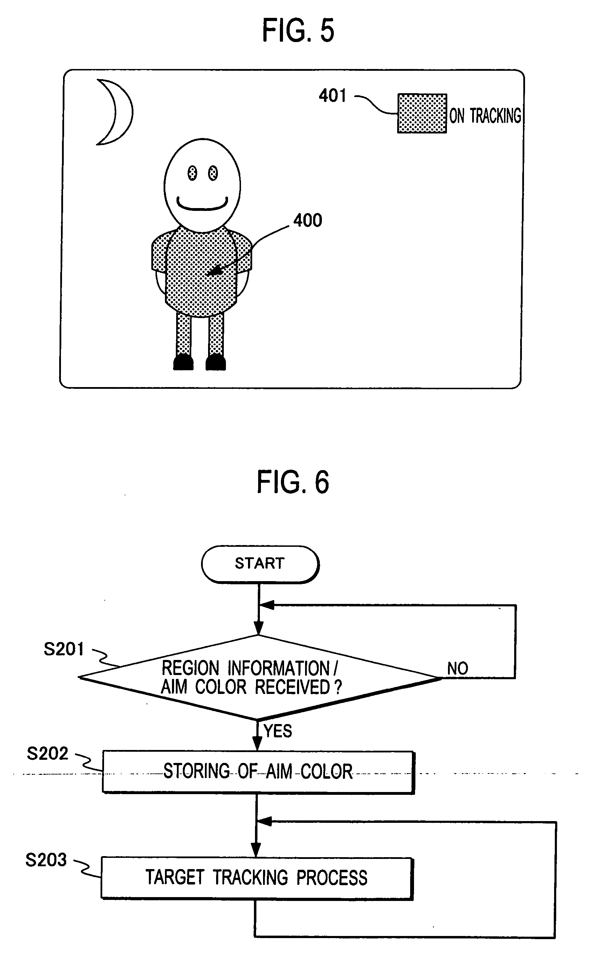

Fig. 5 is a view showing an image sample displayed on the display unit 40. In the illustrated example, a person is assigned as the object to be tracked. Assume that the color of clothes 400 of the person is established as the aim color. As shown in this figure, information 410 showing the aim color is displayed in the upper right in the image based on the video signal, synthetically. The displaying of the information 401 showing the aim color may be switchable between on-state and off-state in displaying.

In this way, as the information about the aim color is displayed on the screen, the observer can grasp the aim color as a reference of the target tracking process. Thus, for instance, even if the apparent color of the object to be tracked changes due to influence of illumination etc., the observer could recognize how much the aim color in assigning the object to be tracked has been changed. Consequently, it is possible for the observer to perform re-assignment of the object to be tracked at the process (S103), appropriately. Note that when the-re-assignment of the object to be tracked is accepted (S103, Yes), a new aim color acquired at this re-assignment process will be displayed subsequently (S107).

Fig. 6 is a flow chart explaining the operation of the monitoring camera 10 of the first embodiment. When the tracking processing unit 120 of the monitoring camera 10 receives the region information and the aim color from the PC 20 (S201; Yes), the same unit stores the received aim color in the aim color storing unit 122 (S202). Then, the target tracking process (S203) standardizing on the stored aim color is carried out repeatedly. In addition, the monitoring camera 10 repeats the operation of compressing the taken video signals through the image compression circuit (ENC) 14 and subsequently generating them from the Network I/F 15 to the PC 20.

As mentioned above, the target tracking process carried out by the tracking processing unit 120 of the monitoring camera 10 using the aim color can be accomplished with the use of known techniques, without limiting the algorithm. By way of example, the operation may be executed according to the following procedure in general.

First, an image frame is stored in the image storing unit 121. Then, the stored image frame is divided into a plurality of blocks. Further, it is executed to compare the stored image frame with the aim color stored in the aim color storing unit 122, with respect to each block. In this comparison, it is executed to count up the number of pixels each having its color identical or similar to the aim color, out of all pixels contained in each block. As a result, the target tracking process is performed by judging that the object to be tracked is present in a block having a maximum in the number of pixels among the pixels. Thereafter, the monitoring camera is subjected to pan, tilt and zooming actions so that the region of the object to be tracked obtained by the target tracking process falls in the field angle of the camera.

Next, the second embodiment of the operation of the monitoring system having the above structure will be described. The second embodiment will be described with respect to differences from the first embodiment mainly. According to the second embodiment, the monitoring camera 10 is adapted so as to renew the aim color when the apparent color of the object to be tracked changes. This operation will be described.

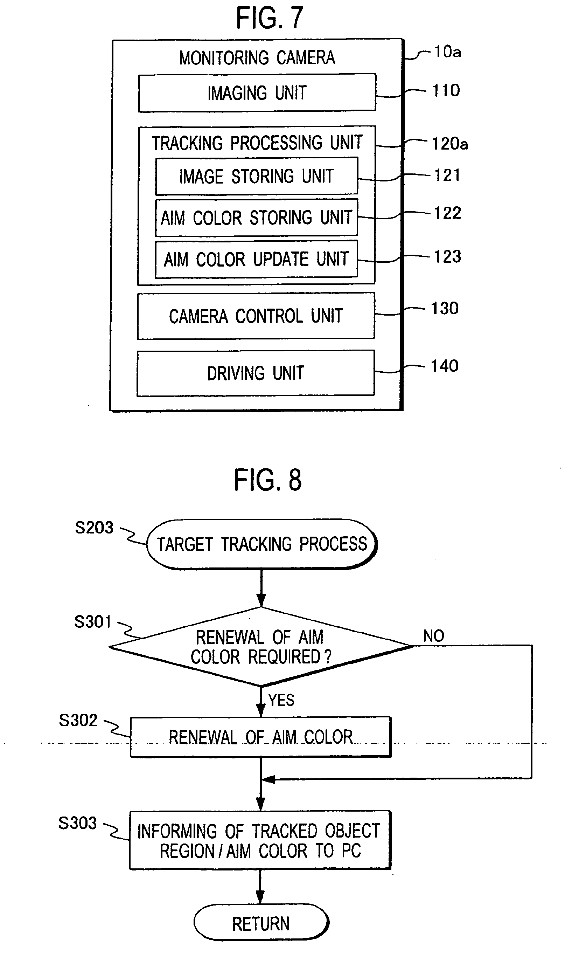

Fig. 7 is a block diagram showing the functional constitution of the monitoring camera of the second embodiment. In the second embodiment, blocks identical to those of the first embodiment are indicated with the same reference numerals respectively, and their descriptions are eliminated. Note that the PC 20 may be provided with its functional constitution similar to that of the first embodiment.

As shown in this figure, a monitoring camera 10a comprises an imaging unit 110, a tracking processing unit 120a, a camera control unit 130 and a driving unit 140. The tracking processing unit 120 includes an image storing unit 121 and an aim color storing unit 122 and further includes an aim color update unit 123.

Here, the target tracking process of the second embodiment and the aim color update process carried out by the aim color update unit 123 will be described. The target tracking process of the second embodiment and the aim color update process carried out by the aim color update unit 123 can be accomplished with the use of known techniques, without limiting the algorithm.

Assume that the target tracking process is carried out by the particle filter in this embodiment. On the assumption that a number of possible next states succeeding to the present state are regarded as a number of particles, the particle filter is an algorithm to perform the target tracking while predicting, as the next-coming state, a weighed mean based on the likelihoods of all particles.

The aim color update unit 123 is adapted so as to execute the aim color update process when the particle having a high likelihood becomes nonexistent sufficiently as a result of measuring the likelihood of each particle while targeting at the aim color stored in the aim color storing unit 122.

In the aim color update process, a region with motion is detected by switching a measuring object for the likelihood of each particle from the aim color to a luminance difference between the present frame and the previous or next frame. Then, it is estimated that the region where a motion have been detected corresponds to the position of an object to be tracked. On this estimation, the color acquired from the region is established as a new aim color and then, it is stored in the aim color storing unit 122. Subsequently, the target tracking process is restarted with the use of a renewed aim color.

Of course, the target tracking process and the aim color update process of this embodiment may be carried out with the use of the other known technique. For example, simply, the aim color may be renewed since the color of the object to be tracked is reacquired with respect to each target tracking process.

Fig. 8 is a flow chart explaining the characteristic operation of the monitoring camera 10a of the second embodiment. This operation is executed in the form of a sub-routine of the target tracking process (S203) which is an operation of the monitoring camera 10 of the first embodiment shown in Fig. 6.

That is, at the target tracking process (S203), the aim color update unit 123 judges whether the aim update process is necessary or not (S301) and renews the aim color when judging it is necessary (S302). The criterion whether the target update process is necessary or not and the process of updating the aim color are as explained above.

Then, according to the second embodiment, it is executed to inform the PC 20 of the region information of the object to be tracked estimated as a result of the target tracking process by the monitoring camera 10a and the most recent aim color (S303). It is contemplated that the PC 20 is informed of the region information of the object to be tracked, with respect to each target tracking process, regardless of the possibility of updating the aim color. Whenever the target tracking process is carried out, the most recent aim color may be informed. Alternatively, it may be informed only when the aim color has been renewed.

For example, the region information about the object to be tracked can be expressed by, for example, diagonal coordinates of a rectangular region corresponding to the object to be tracked. Further, the most recent aim color may be represented by RGB values of the aim color stored in the aim color storing unit 122. In general, in JPEG stream, MPEG stream, etc. widely used as digital video signals, it is possible to add unique data to a segment for comment or user data. The PC 20 can be informed of the region information about the object to be tracked and the most recent aim color in real time, for example, as they are recorded in the segment for comment about the image data generated by the monitoring camera 10.

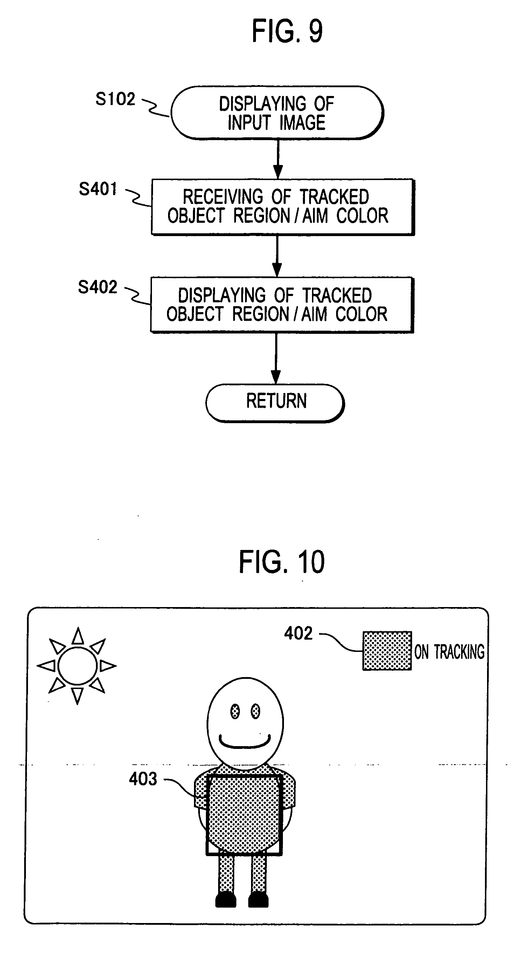

Fig. 9 is a flow chart explaining the characteristic feature of the PC 20 of the second embodiment. This operation is executed in the form of a sub-routine of the input image display process (S102) which is an operation of the PC 20 of the first embodiment shown in Fig. 4.

That is, at the input image display process (S102), the display control unit 211 receives the region information about the object to be tracked and the most recent aim color sent from the monitoring camera 10a (S401). Then, the received region information about the object to be tracked and the most recent aim color are combined with an image based on the video signals from the monitoring camera 10a and further displayed on the display unit 40 (S402).

Fig. 10 is a view showing an example of an image displayed on the display unit 50. Assume that in the example of this figure a person is assigned as the object to be tracked, while the color of clothes of the person is established as the aim color. Here, information 402 showing the aim color is displayed in the upper right in the image based on the video signals from the monitoring camera 10a, synthetically. In addition, the region information about the object to be tracked is displayed in the form of a frame 403. Consequently, the observer becomes easy to recognize the position of the object to be tracked.

As the region information about the object to be tracked is renewed with respect to each target tracking process and further sent to the PC 20, the frame 403 will be moved in accord with the movement of the object to be tracked. In addition, since the information 402 exhibiting the aim color is adapted so as to display the most recent aim color used at the target tracking process, a renewal of the aim color at the monitoring camera 10a will be reflected on the screen of the display device 402 instantly. Note that the displaying of the information 402 exhibiting the aim color and also the frame 404 may be switchable between on-state and off-state in displaying.

In this way, as the information exhibiting the most recent aim color is displayed on the screen, the observer can grasp the aim color as a reference of the target tracking process in real time. Thus, if the aim color is changed in the monitoring camera 10a, then the observer can recognize the renewed aim color and perform a verification of the renewal of the aim color. In addition, even if the apparent color of the object to be tracked changes due to the influence of illumination etc., it would be possible to compare the most recent aim color with the apparent color of the object to be tracked. Consequently, it is possible for the observer to perform re-assignment of the object to be tracked at the process (S103), appropriately.

Next, the third embodiment of the operation of the monitoring system having the above structure will be described. In the third embodiment, there will be described differences from the second embodiment mainly. Under a situation where the aim color has been renewed by the monitoring camera 10, according to the third embodiment, the PC 20 is adapted so as to indicate the aim color being renewed only when there exists a great difference between the renewed aim color and the prior aim color before the renewal. This operation will be described.

In the third embodiment, the monitoring camera and the PC may be provided with similar functional constitutions to those of the second embodiment. In addition, the operation of the monitoring camera of the third embodiment may be similar to that of the second embodiment. That is, in the target tracking process, it is executed to renew the aim color as occasion demands and further inform the PC 20 of the renewed aim color.

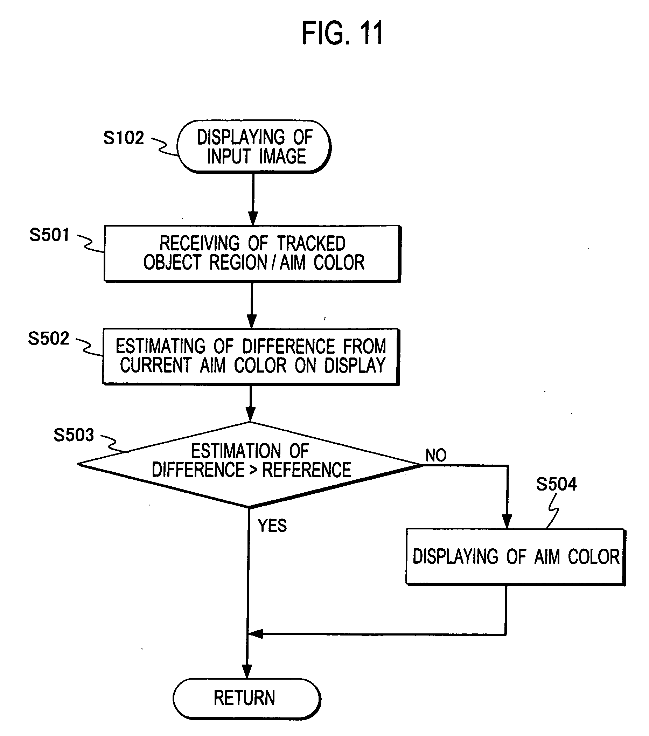

Fig. 11 is a flow chart explaining the characteristic operation of the PC 20 of the third embodiment. This operation is executed in the form of a sub-routine of the input image display process (S102) which is an operation of the PC 20 of the first embodiment shown in Fig. 4.

That is, at the input image display process (S102), the display control unit 211 receives the region information about the object to be tracked and the most recent aim color both sent from the monitoring camera 10a (S501). Then, it is executed to estimate a difference between the current aim color and the most recent aim color on receipt (S502). For instance, the estimation of a difference between the current aim color and the received most recent aim color may be carried out according to the following steps.

First, the current aim color and the received most recent aim color both in the form of RGB are converted to values in the YUV form by the following formulae:

$$Y = 0.299 \times R + 0.587 \times G + 0.114 \times B;$$

$$U = -0.169 \times R - 0.331 \times G + 0.500 \times B;$$

and

$$V = 0.500 \times R - 0.419 \times G - 0.081 \times B,$$

where Y designates a luminance signal, U designates a differential signal between the luminance signal and blue component, and V designates a differential signal between the luminance signal and red component.

Then, upon representing the current aim color and the received most recent aim color by (Y1, U1, V1) and (Y2, U2, V2) respectively, evaluated values Y3, U3 and VI are calculated by the following formulae:

$$Y3 = Y2 - Y1;$$

$$U3 = U2 - U1;$$

and

$$V3 = V2 - V1.$$

Next, it is executed judge whether the calculated evaluated value is larger than a predetermined reference (S503). Then, if the evaluated value is larger than the predetermined reference, it means that there exists a great difference between the current aim color and the received most recent aim color.

Assume that for instance T represents a threshold value. Then, if any of inequalities of T < Y3; T < U3; and T < V3 is satisfied, it could be judged that the evaluated value is larger than the reference. For instance, if Y, U and V range from 0 to 255 respectively, the threshold value T may be set to about 20.

Alternatively, there may be adopted different threshold values Ty, Tu and Tv for Y, U and V, respectively. Then, if any of inequalities of: Ty < Y3; Tu < U3; and Tv < V3 is satisfied, it could be judged that the evaluated value is larger than the reference. In this case, for instance, the threshold values Ty, Tu and Tv may be set to about 40, 20 and 20, respectively. In the tracking process by the tracking processing unit 120 of the monitoring camera 10, the consistency of internal processing can be accomplished by making these threshold values accord with either reference threshold values allowing the detected color to be regarded as the same color as the aim color or reference threshold values allowing a judgment of the situation where the aim color has changed.

Alternatively, there may be adopted a color difference by a square-root of sum of squares of Y3, U3 and V3 for the evaluated value. Assume that in this case T represents a threshold value, for example. Then, if an inequality of $T^2 < (Y3^2 + U3^2 + V3^2)$ is satisfied, it could be judged that the evaluated value is larger than the reference, and there exists a great difference between the current aim color and the received most recent aim color. However, the evaluating method of a difference between the current aim color and the received most recent color is not limited to these methods only.

As a result of evaluating a difference between the current aim color and the received most recent aim color, if it is judged that there is a great difference therebetween exceeding the predetermined reference (S503: Yes), the displaying of the aim color is carried out (S504). On the contrary, if it is judged that the difference is not large (S503: No), then the displaying of the aim color is not carried out. Consequently, under condition that the monitoring camera 10a has renewed the aim color, if there exist a great change between the renewed aim color and the current aim color, the information designating the aim color will be displayed on the display device 40, as shown in Fig. 10.

Note that in order to emphasize that the aim color has changed greatly, it is preferable to delete the information 402 showing the aim color after a predetermined period has passed since the displaying of the information 402 showing the aim color. Thus, as the information 402 showing the aim color is displayed newly, the observer can recognize a fact that the aim color has changed greatly, easily. Conversely, in case of less change in the aim color, an image based on the video signals from the monitoring camera 10a becomes easily viewable since the information 402 showing the aim color is not displayed. Of course, the information 402 showing the aim color may be deleted according to an observer's instruction.

In displaying the information 402 showing the aim color, alternatively, the display may be intensified by, for example, applying an eye-catching frame thereto, blinking or enlarging the display and so on. This will allow the observer to recognize that the aim color has changed greatly, more easily.

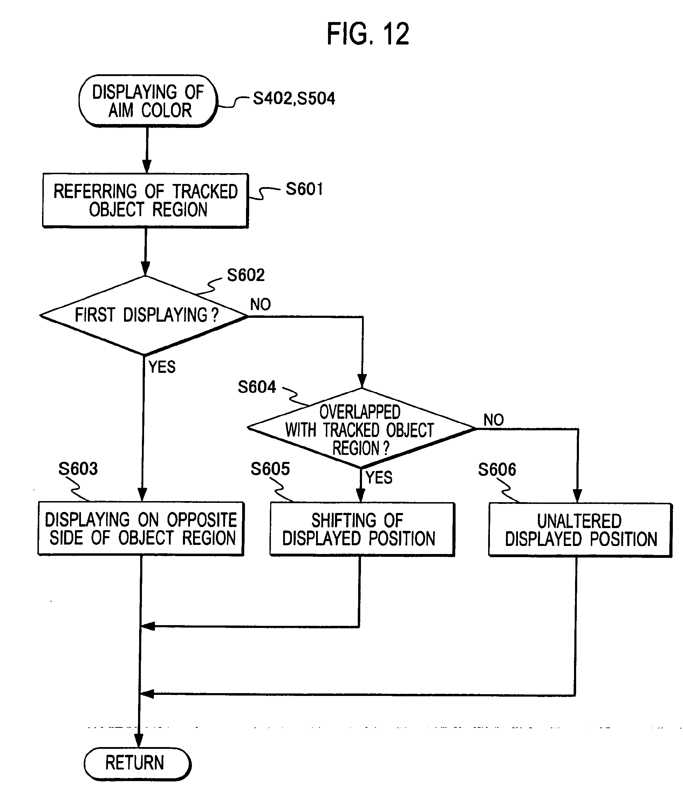

Modifications of the second and third embodiments mentioned above will be described finally. In the modifications, there will be explained an adjustment in the displaying position of the information showing the aim color. Fig. 12 is a flow chart explaining the characteristic feature of the PC 20 in the modifications. This operation is executed in the form of a sub-routine in common with the aim color display process (S402) of the second embodiment of Fig. 9 and the aim color display process (S504) of the third embodiment of Fig. 11.

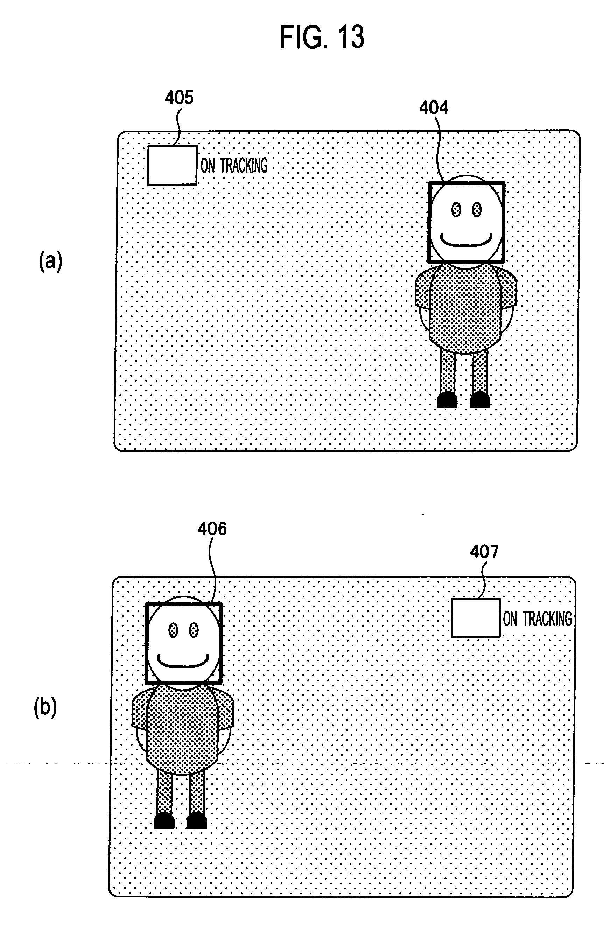

In the modifications, when displaying the information showing the aim color, it is executed to refer to either the tracked object region acquired from the monitoring camera 10 or the tracked object region assigned by the observer (S601). Then, at the initial displaying of the information showing the aim color (S602: Yes), it is displayed in the screen, on the opposite side of the tracked object region. By way of example, as shown in Fig. 13(a), if the tracked object region 404 is present on the right side of the screen at the initial displaying of the information showing the aim color, the information 405 showing the aim color is displayed on the left side of the screen. Consequently, it is possible to prevent the information 405 showing the aim color from interfering in an observer's monitoring of the object to be tracked.

If it's the second or later displaying of the aim color (602: No), then it is executed to judge whether the information showing the aim color on display overlaps the tracked object region or not (S604). As a result, if the former does not overlap the latter (S604: No), the information showing the aim color is displayed without altering the displaying position (S606).

On the other hand, if the information showing the aim color on display overlaps the tracked object region (S604: Yes), the information showing the aim color is displayed upon changing the displaying position (S605). By way of example, as shown in Fig. 13(b), if the tracked object region 406 is moving to the left side, the information 407 showing the aim color is displayed on the opposite right side of the screen. Consequently, it is possible to prevent the aim color 407 from interfering in an observer's monitoring of the object to be tracked. Although the displaying position is limited to either upper left or upper right in the screen in the above examples, the displaying position is not limited to these areas only.

Note that the displaying position of the aim color may be modified according to an observer's instruction. Also, the displaying size of the aim color may be modified according to an observer's instruction.

## INDUSTRIAL APPLICABILITY

According to the present invention, in the automatic tracking process using an aim color, there can be provided an image display device allowing an observer to recognize the aim color set in an imaging device easily.

## REFERENCE SIGNS LIST

10    Monitoring Camera

11    Imaging Optical System

12    Image Pickup Device (CCD)

13    Digital Signal Processor (DSP)

14    Image Compression Circuit (ENC)

15    Network I/F

16    Driving Mechanism

20    PC

21    CPU

22    Memory (MEM)

23    Video Card

24    Interface (I/F)

25    Hard Disc Drive (HDD)

26    Network Interface Card (NIC)

30    Input Device

40    Display Device

70    Network

110   Imaging Unit

120   Tracking Processing Unit

121   Image Storing Unit

122   Aim Color Storing Unit

123   Aim Color Update Unit

130   Camera Control Unit

140   Driving Unit

210   Viewer Processing Unit

211   Display Control Unit

212   Tracked Object Indicating Unit

**Claims**

1. An image display device comprising:

   a display control unit configured to input video signals obtained as a result of a tracking process using an aim color and color information showing the aim color, the video signals and the color information being generated from an imaging device, and also configured to combine an image based on the video signals with an image based on the color information;
   a display unit configured to display a synthetic image combined by the display control unit; and
   a tracked object indicating unit configured to accept an indication against an object to be tracked in the tracking process, from an outside.

2. The image display device of claim 1, wherein
   the display control unit is configured so that when a difference between the aim color shown by the color information inputted most recently and an aim color shown by the color information inputted newly is larger than a predetermined reference, the image based on the video signals is combined with the image based on the color information inputted newly.

3. The image display device of claim 1 or 2, wherein
the display control unit is configured to further input region information of the object to be tracked obtained as a result of the tracking process, and
the display control unit is configured to combine the image based on the video signals with the image based on the color information so that the image based on the color-information is positioned so as not to overlap a region shown by the region information.

4. An imaging device comprising:

an imaging unit configured to take an image and output video signals related to the image; and
a tracking processing unit configured to:

accept an assignment of both an object to be tracked and an aim color;
renew the aim color when a predetermined condition is satisfied, and also perform a tracking process of the object to be tracked while aiming at the video signals related to the image, with use of the aim color established; and
renew the aim color when the predetermined condition is satisfied and generate color information showing the aim color renewed and established.

5. An image display system including an imaging device and an image display device, wherein
the imaging device includes:

an imaging unit configured to take an image and output video signals related to the image; and
a tracking processing unit configured to accept an assignment of both an object to be tracked and an aim color, renew the aim color when a predetermined condition is satisfied, and also perform a tracking process of the object to be tracked while aiming at the video signals related to the image, with use of the aim color established, and generate color information showing the aim color established, and

the image display device includes:

a display control unit configured to input the video signals and the color information generated from the imaging device, and combine an image based on the video signals with an image based on the color information;
a display unit configured to display a synthetic image combined by the display control unit; and
a tracked object indicating unit configured to accept an indication against the object to be tracked in the tracking process, from an outside, acquire an aim color based on the accepted object to be tracked, and inform the imaging device of the accepted object to be tracked and the acquired aim color.

6. The image display system of claim 5, wherein
the display control unit of the image display device is configured so that when a difference between the aim color shown by the color information inputted most recently and an aim color shown by the color information inputted newly is larger than a predetermined reference, the image based on the video signals is combined with the image based on the color information inputted newly.

7. The image display system of claim 5 or 6, wherein
the display control unit of the image display device is configured to:

further input region information of the object to be tracked obtained as a result of the tracking process; and
combine the image based on the video signals with the image based on the color information so that the image based on the color information is positioned so as not to overlap a region shown by the region information.

8. An image display method comprising:

a display control step of inputting video signals obtained as a result of a tracking process using an aim color and color information showing the aim color, the video signals and the color information being generated from an imaging device, and combining an image based on the video signals with an image based on the color information;

a display step of displaying a synthetic image combined by the display control unit; and

a tracked object indication accepting step of accepting an indication against an object to be tracked in the tracking process, from an outside.

9. The image display method of claim 8, wherein when a difference between the aim color shown by the color information inputted most recently and an aim color shown by the color information inputted newly is larger than a predetermined reference,

the display control step is to combine the image based on the video signals with the image based on the color information inputted newly.

10. the image display method of claim 8 or 9, wherein

the display control step is to further input region information of the object to be tracked obtained as a result of the tracking process, and combine the image based on the video signals with the image based on the color information so that the image based on the color information is positioned so as not to overlap a region shown by the region information.

11. An image synthesis device comprising:

an image synthesizing unit configured to input video signals obtained as a result of a tracking process using an aim color and color information showing the aim color, the video signals and the color information being generated from an imaging device, and also configured to combine an image based on the video signals with an image based on the color information; and

a tracked object indicating unit configured to accept an indication against an object to be tracked in the tracking process, from an outside.

12. The image synthesis device of claim 11, wherein when a difference between the aim color shown by the color information inputted most recently and an aim color shown by the color information inputted newly is larger than a predetermined reference,

the image synthesizing unit combines the image based on the video signals with the image based on the color information inputted newly.

13. The image synthesis device of claim 11 or 12, wherein

the image synthesizing unit further inputs region information of the object to be tracked obtained as a result of the tracking process, and combines the image based on the video signals with the image based on the color information so that the image based on the color information is positioned so as not to overlap a region shown by the region information.

# FIG. 1

# FIG. 2

| MONITORING CAMERA | 10 |
|---|---|
| IMAGING UNIT | 110 |
| **TRACKING PROCESSING UNIT** | 120 |
| IMAGE STORING UNIT | 121 |
| AIM COLOR STORING UNIT | 122 |
| CAMERA CONTROL UNIT | 130 |
| DRIVING UNIT | 140 |

# FIG. 3

| PC | 20 |
|---|---|
| **VIEWER PROCESSING UNIT** | 210 |
| DISPLAY CONTROL UNIT | 211 |
| TRACKED OBJECT INDICATING UNIT | 212 |

# FIG. 4

START

S101 — ACCEPTING OF INDICATION TO START AUTOMATIC TRACKING

S102 — DISPLAYING OF INPUT IMAGE

S103 — ASSIGNMENT OF TRACKED OBJECT ACCEPTED ? — NO

YES

S104 — ACQUISITION OF REGION INFORMATION

S105 — ACQUISITION OF AIM COLOR

S106 — INFORMING OF REGION INFORMATION / AIM COLOR TO MONITORING CAMERA

S107 — DISPLAYING OF AIM COLOR

S108 — INDICATION TO FINISH AUTOMATIC TRACKING ACCEPTED ? — NO

YES

END

## FIG. 5

401 — ☒ ON TRACKING

400

## FIG. 6

```
                    START
                      │
                      ▼
S201 ◁      REGION INFORMATION /        NO
            AIM COLOR RECEIVED ? ───────────┐
                      │                      │
                     YES                     │
                      ▼                      │
S202    │ STORING OF AIM COLOR │             │
                      │                      │
                      ▼                      │
S203    │ TARGET TRACKING PROCESS │          │
                      │                      │
                      └──────────────────────┘
```

# FIG. 7

```
┌──────────────────────────────────────────┐
│ MONITORING CAMERA                    ─ 10a│
│ ┌──────────────────────────────────┐      │
│ │        IMAGING UNIT              │─ 110 │
│ └──────────────────────────────────┘      │
│ ┌──────────────────────────────────┐      │
│ │ TRACKING PROCESSING UNIT         │─ 120a│
│ │ ┌──────────────────────────────┐ │      │
│ │ │    IMAGE STORING UNIT        │─ 121  │
│ │ └──────────────────────────────┘ │      │
│ │ ┌──────────────────────────────┐ │      │
│ │ │  AIM COLOR STORING UNIT      │─ 122  │
│ │ └──────────────────────────────┘ │      │
│ │ ┌──────────────────────────────┐ │      │
│ │ │  AIM COLOR UPDATE UNIT       │─ 123  │
│ │ └──────────────────────────────┘ │      │
│ └──────────────────────────────────┘      │
│ ┌──────────────────────────────────┐      │
│ │    CAMERA CONTROL UNIT           │─ 130 │
│ └──────────────────────────────────┘      │
│ ┌──────────────────────────────────┐      │
│ │        DRIVING UNIT              │─ 140 │
│ └──────────────────────────────────┘      │
└──────────────────────────────────────────┘
```

# FIG. 8

S203 — ( TARGET TRACKING PROCESS )

S301 — < RENEWAL OF AIM COLOR REQUIRED ? > — NO

↓ YES

S302 — [ RENEWAL OF AIM COLOR ]

S303 — [ INFORMING OF TRACKED OBJECT REGION / AIM COLOR TO PC ]

( RETURN )

# FIG. 9

S102 — DISPLAYING OF
INPUT IMAGE

↓

S401 — RECEIVING OF TRACKED
OBJECT REGION / AIM COLOR

↓

S402 — DISPLAYING OF TRACKED
OBJECT REGION / AIM COLOR

↓

RETURN

# FIG. 10

402 — ON TRACKING

403

# FIG. 11

S102 — ( DISPLAYING OF INPUT IMAGE )

S501 — RECEIVING OF TRACKED OBJECT REGION / AIM COLOR

S502 — ESTIMATING OF DIFFERENCE FROM CURRENT AIM COLOR ON DISPLAY

S503 — ESTIMATION OF DIFFERENCE > REFERENCE — NO — S504 — DISPLAYING OF AIM COLOR

YES

( RETURN )

# FIG. 12

```
        ┌─────────────────────┐
        │   DISPLAYING OF      │ ⟋ S402,S504
        │    AIM COLOR         │
        └─────────────────────┘
                  │
                  ▼
        ┌─────────────────────┐
        │ REFERRING OF TRACKED │ ⟋ S601
        │   OBJECT REGION      │
        └─────────────────────┘
                  │
                  ▼
             ⟋ S602
         ◇─────────────────◇  NO
         │ FIRST DISPLAYING ?├──────────────┐
         ◇─────────────────◇               │
                  │                          ▼
                 YES              S604 ⟋ ◇──────────────◇  NO
                  │                     │  OVERLAPPED    ├──────────┐
                  │                     │WITH TRACKED OBJECT         │
                  │                     │   REGION ?     │           │
                  │                     ◇──────────────◇            │
                  │                           │                      │
   S603          │          S605              YES        S606        │
    ⟋            ▼           ⟋                 │          ⟋          ▼
┌──────────────────┐  ┌──────────────────┐    │    ┌──────────────────┐
│DISPLAYING ON     │  │  SHIFTING OF      │◄───┘    │    UNALTERED      │
│OPPOSITE SIDE OF  │  │ DISPLAYED POSITION│         │DISPLAYED POSITION │
│  OBJECT REGION   │  └──────────────────┘         └──────────────────┘
└──────────────────┘          │                              │
         │                    │                              │
         │◄───────────────────┘                              │
         │                                                   │
         │◄──────────────────────────────────────────────────┘
         │
         ▼
   ┌───────────┐
   │  RETURN   │
   └───────────┘
```

# FIG. 13

(a)

405

404

ON TRACKING

(b)

406

407

ON TRACKING

| | | |
|---|---|---|
| **INTERNATIONAL SEARCH REPORT** | International application No. | |
| | PCT/JP2010/054834 | |

**A. CLASSIFICATION OF SUBJECT MATTER**
*H04N7/18*(2006.01)i, *H04N5/225*(2006.01)i, *H04N5/232*(2006.01)i

According to International Patent Classification (IPC) or to both national classification and IPC

**B. FIELDS SEARCHED**

Minimum documentation searched (classification system followed by classification symbols)
H04N7/18, H04N5/225, H04N5/232

Documentation searched other than minimum documentation to the extent that such documents are included in the fields searched
Jitsuyo Shinan Koho      1922–1996   Jitsuyo Shinan Toroku Koho   1996–2010
Kokai Jitsuyo Shinan Koho   1971–2010   Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-289529 A  (Minolta Co., Ltd.),<br>10 October 2003 (10.10.2003),<br>paragraphs [0024] to [0030]; fig. 7 to 9<br>& US 2003/0202102 A1 | 1-13 |
| A | JP 2000-232642 A  (Sony Corp.),<br>22 August 2000 (22.08.2000),<br>paragraphs [0041] to [0058]; fig. 7<br>(Family: none) | 1-13 |
| A | JP 5-205052 A  (Matsushita Electric Industrial<br>Co., Ltd.),<br>13 August 1993 (13.08.1993),<br>paragraphs [0008] to [0039]; fig. 1 to 9<br>(Family: none) | 1-13 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 June, 2010 (21.06.10) | Date of mailing of the international search report<br>29 June, 2010 (29.06.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/054834 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P,A | JP 2009-212637 A  (Sanyo Electric Co., Ltd.), 17 September 2009 (17.09.2009), paragraph [0058]; fig. 9 & WO 2009/110348 A1 | 1-13 |

Form PCT/ISA/210 (continuation of second sheet) (July 2009)

**EP 2 413 602 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5284411 A

- JP 7154666 A